# EUROPEAN PATENT APPLICATION

(11) **EP 4 395 006 A1**
(43) Date of publication of application: **03.07.2024**
(21) Application number: 22947582.7
(22) Date of filing: 16.08.2022
(51) Int. Cl.: H01M 10/613

(54) **BATTERY HOUSING, BATTERY CELL, BATTERY AND ELECTRIC DEVICE**

(30) Priority: 21.06.2022 CN 202221549638 U
(71) Applicant: Contemporary Amperex Technology Co., Limited, Ningde, Fujian 352100 (CN)
(72) Inventor: XI, Fei, Ningde, Fujian 352100 (CN); TANG, Daichun, Ningde, Fujian 352100 (CN)
(74) Representative: von Tietzen und Hennig, Nikolaus
(86) International application number: PCT/CN2022/112815
(87) International publication number: WO 2023/245841

(57) **Abstract**

The present application relates to a battery shell, a battery cell, a battery, and a power consuming device. At least one face of a shell body facing and/or facing away from an accommodating cavity is provided with heat dissipation recesses, so that the face has a non-penetrating "skylight" structure. In this way, the thickness of the shell body can be reduced at positions where the heat dissipation recesses are provided, so as to shorten the conduction path of heat in the accommodating cavity to ensure a short heat diffusion path, which achieves effective and rapid heat dissipation and is conducive to prolonging the service life of the battery. In addition, the at least one face of the shell body is provided with the heat dissipation recesses, so that on the premise of achieving effective heat dissipation, there is no need to introduce an additional structure, which is not only conducive to reducing the weight of the battery cell, but also does not affect the group margin of an electrode assembly in a covert form, thereby ensuring the stable performance of the battery cell.

## Description

### Cross-Reference to Related Applications

The present application refers to Chinese patent application no. 202221549638.7, filed on June 21, 2022, and entitled "BATTERY SHELL, BATTERY CELL, BATTERY, AND POWER CONSUMING DEVICE", which is incorporated herein by reference in its entirety.

### Technical Field

The present application relates to the technical field of batteries, and in particular to a battery shell, a battery cell, a battery, and a power consuming device.

### Background Art

Electric vehicles have become an important part of the sustainable development of the automotive industry due to their advantages in energy conservation and environmental protection. For the electric vehicles, the battery technology is an important factor to their development.

With requirements for a high battery life, the capacity of battery cell is increased. However, the heat generated during operation of the battery cell also increases. If the heat inside the battery cell cannot be effectively dissipated, the service life and safety of the battery cell will be seriously affected.

### Summary of the Invention

In view of this, it is necessary to provide a battery shell, a battery cell, a battery, and a power consuming device, which achieve effective and rapid heat dissipation and is conducive to prolonging the service life of the battery.

In a first aspect, the present application provides a battery shell, including: a shell body internally provided with an accommodating cavity; and heat dissipation recesses provided in at least one face of the shell body facing and/or facing away from the accommodating cavity, wherein the heat dissipation recesses extend in a thickness direction of the shell body without penetrating the shell body.

In the battery shell described above, the at least one face of the shell body facing and/or facing away from the accommodating cavity is provided with the heat dissipation recesses, so that the face is provided with a non-penetrating "skylight" structure. In this way, the thickness of the shell body can be reduced at positions where the heat dissipation recesses are provided, so as to shorten the conduction path of heat in the accommodating cavity to ensure a short heat diffusion path, which achieves effective and rapid heat dissipation and is conducive to prolonging the service life of the battery. In addition, the at least one face of the shell body is provided with the heat dissipation recesses, so that on the premise of achieving effective heat dissipation, there is no need to introduce an additional structure, which is not only conducive to reducing the weight of the battery cell, but also does not affect the group margin of an electrode assembly in a covert form, thereby ensuring the stable performance of the battery cell.

In some embodiments, the at least one face of the shell body is provided with a plurality of heat dissipation recesses, and all the heat dissipation recesses are arranged at intervals. In this way, the plurality of heat dissipation recesses are arranged at intervals in the at least one face of the shell body, so that the face is of a honeycomb structure to further improve the heat dissipation efficiency, thereby improving the service life and performance of the battery cell.

In some embodiments, an end of the shell body in a first direction is provided with an opening in communication with the accommodating cavity, any face of the shell body around a circumference of the opening is provided with a first region and second regions respectively located on two sides of the first region in the first direction, and the plurality of heat dissipation recesses are arranged at intervals in each of the first region and the two second regions. In this way, the heat dissipation recesses are configured such that the distribution density, shapes and sizes of the heat dissipation recesses can be well adjust according to the current distribution and heat distribution, so as to achieve more reasonable heat distribution on the shell body.

In some embodiments, a distribution density of the heat dissipation recesses in each of the second regions is greater than that of the heat dissipation recesses in the first region. In this way, the distribution density of the heat dissipation recesses in the second region is greater than that of the heat dissipation recesses in the first region, so as to achieve better heat dissipation effect of the shell body close to the top and the bottom to ensure more uniform heat dissipation distribution of the battery shell.

In some embodiments, at least one heat-conducting structure is provided in the second region close to the opening on at least one face of the shell body which is arranged around the circumference of the opening and parallel to a second direction, and the heat-conducting structure is located at a position corresponding to a tab of an electrode assembly, wherein the second direction is a length direction of the opening and intersects the first direction. In this way, providing the heat-conducting structure at the position corresponding to the tab improves the heat dissipation efficiency at this position, so as to ensure more uniform heat dissipation from the battery cell.

In some embodiments, the heat-conducting structure includes at least two heat-conducting annular slots, and all the heat-conducting annular slots are sequentially arranged one inside another at intervals in a sleeving manner in a radial direction of the heat-conducting structure. In this way, the heat-conducting structure is designed as a multi-ring structure, which is convenient to accelerate the dissipation of heat generated at the tab to alleviate the problem of great temperature rise due to heat generation at the tab.

In some embodiments, depths of the heat-conducting annular slots gradually decrease outward in the radial direction of the heat-conducting structure. The depths of the heat-conducting annular slots gradually decrease from the inner circle to the outer circle, so that the heat-conducting structure can adapt to the regions with different amounts of generated heat to achieve more uniform heat dissipation.

In some embodiments, two heat-conducting structures are provided, and the two heat-conducting structures are arranged at positions corresponding to two tabs on the electrode assembly on a one-to-one basis. In this way, the heat-conducting structures are arranged corresponding to the tabs on a one-to-one basis, so that the heat generated at the two tabs can both be effectively dissipated, thereby improving the heat dissipation efficiency of the battery cell.

In some embodiments, the faces of the shell body around the circumference of the opening include two first side faces parallel to the second direction and two second side faces connected to the two first side faces, and the heat dissipation recesses are arranged at intervals in each of the two first side faces and the two second side faces. In this way, the faces of the shell body around the periphery of the opening are designed to include the two first side faces and the two second side faces, and the plurality of heat dissipation recesses are arranged in each of the first side faces and the second side faces, so as to achieve more uniform and effective circumferential heat dissipation from the shell body.

In some embodiments, each of the heat dissipation recesses in the first region of the first side face has a depth which is 0.06-0.4 of the thickness of the shell body at the first side face. In this way, the depths of the heat dissipation recesses in the first region of the first side face are reasonably controlled, so that on the promise of ensuring effective heat dissipation, the structural strength of the first side face is also ensured, so as to prevent deformation of the entire structure due to the expansion of the electrode assembly.

In some embodiments, each of the heat dissipation recesses in the second region of the first side face has a depth which is 0.06-0.3 of the thickness of the shell body at the first side face. In this way, the depths of the heat dissipation recesses in the second region of the first side face are reasonably controlled, so that on the premise of ensuring effective heat dissipation, the structural strength of the first side face is also ensured, so as to prevent deformation of the entire structure due to the expansion of the electrode assembly.

In some embodiments, each of the heat dissipation recesses in the first region of the second side face has a depth which is 0.1-0.4 of the thickness of the shell body at the second side face. In this way, the depths of the heat dissipation recesses in the first region of the second side face are reasonably controlled, so that on the promise of ensuring effective heat dissipation, the structural strength of the second side face is also ensured, so as to prevent deformation of the entire structure due to the expansion of the electrode assembly.

In some embodiments, each of the heat dissipation recesses in the second region of the second side face has a depth which is 0.05-0.55 of the thickness of the shell body at the second side face. In this way, the depths of the heat dissipation recesses in the second region of the second side face are reasonably controlled, so that on the promise of ensuring effective heat dissipation, the structural strength of the second side face is also ensured, so as to prevent deformation of the entire structure due to the expansion of the electrode assembly.

In some embodiments, the faces of the shell body facing away from the opening include a bottom face, and the plurality of heat dissipation recesses are arranged at intervals in the bottom face. In this way, providing the heat dissipation recesses in the bottom face is conducive to accelerating heat exchange between a fluid and a cell.

In some embodiments, each of the heat dissipation recesses in the bottom face has a depth which is 0.1-0.5 of the thickness of the shell body at the bottom face. In this way, the depths of the heat dissipation recesses in the bottom face are reasonably controlled, so that on the promise of ensuring effective heat dissipation, the structural strength of the bottom face is also ensured, so as to prevent deformation of the entire structure due to the expansion of the electrode assembly.

In some embodiments, all the heat dissipation recesses are arranged in an outer surface of the shell body facing away from the accommodating cavity. In this way, providing the heat dissipation recesses in the outer surface of the shell body can not only improve the heat dissipation efficiency, but also prevent problems such as indentations formed in a surface of the electrode assembly caused by uneven force on a large face when the electrode assembly expands.

In a second aspect, the present application provides a battery cell, including: a battery shell according to any one of the embodiments described above; and an electrode assembly accommodated in the accommodating cavity.

In the battery cell described above using the above battery shell, the thickness of the shell body is reduced at positions where the heat dissipation recesses are provided, so as to shorten the conduction path of heat in the accommodating cavity to ensure a short heat diffusion path, which achieves effective and rapid heat dissipation and is conducive to prolonging the service life of the battery.

In a third aspect, the present application provides a battery, including a battery cell described above.

In the battery described above using the above battery shell, the thickness of the shell body is reduced at positions where the heat dissipation recesses are provided, so as to shorten the conduction path of heat in the accommodating cavity to ensure a short heat diffusion path, which achieves effective and rapid heat dissipation and is conducive to prolonging the service life of the battery.

In a fourth aspect, the present application provides a power consuming device, including a battery described above configured to supply electric energy.

In the power consuming device described above using the above battery shell, the thickness of the shell body is reduced at positions where the heat dissipation recesses are provided, so as to shorten the conduction path of heat in the accommodating cavity to ensure a short heat diffusion path, which achieves effective and rapid heat dissipation and is conducive to prolonging the service life of the battery.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become obvious to those of ordinary skill in the art upon reading the following detailed description of preferred implementations. The accompanying drawings are merely for the purpose of illustrating the preferred implementations, and are not to be construed as limiting the present application. Moreover, like components are denoted by like reference signs throughout the accompanying drawings. In the drawings:
FIG. 1 is a schematic diagram of a structure of a vehicle according to some embodiments of the present application;
FIG. 2 is an exploded view of a battery according to some embodiments of the present application;
FIG. 3 is a schematic exploded view of a structure of a battery cell according to some embodiments of the present application;
FIG. 4 is a schematic diagram of a structure of a battery shell according to some embodiments of the present application;
FIG. 5 is a schematic diagram of a structure of a second side face according to some embodiments of the present application; and
FIG. 6 is a schematic diagram of a structure of a bottom face according to some embodiments of the present application.

10000. Vehicle; 1000. Battery; 2000. Controller; 3000. Motor; 100. Battery cell; 10. Battery shell; 11. Shell body; 111. Accommodating cavity; 112. Opening; 113. First side face; 114. Second side face; 115. Bottom face; 12. Heat dissipation recess; 13. First region; 14. Second region; 15. Heat-conducting structure; 151. Heat-conducting annular slot; 20. Electrode assembly; 21. Tab; 30. End cap; 31. Post terminal; 40. Adapter; S1. First direction; S2. Second direction; 200. Case; 210. First portion; 220. Second portion.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "including" and "having" and any variations thereof in the specification and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B may include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element referred to must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

The applicants have noticed that as ions are intercalated in or deintercalated from a positive electrode active material and a negative electrode active material during cycle of charging and discharging of a battery cell, a large amount of heat is generated inside the battery cell. If the heat inside the battery cell cannot be effectively discharged in a timely manner, overheating or lithium precipitation and other phenomena may locally occur in the battery cell, which will shorten the service life of the battery cell.

In order to effectively discharge the heat inside the battery cell, the applicants have found through research that a metal isolation groove may be added in the battery cell, so as to improve the heat dissipation by using the metal isolation groove. Although this structure can improve the heat dissipation efficiency of the battery cell, it will increase the internal structure of the battery cell and cause the whole battery cell to be complicated and heavy. In addition, the added metal isolation groove inside also increases the group margin of the battery cell in a covert form, so as to affect the performance stability of the battery cell.

Based on the above considerations, in order to accelerate heat dissipation without additionally providing an external structure, the applicants provide a battery shell. At least one face of a shell body facing and/or facing away from an accommodating cavity is provided with heat dissipation recesses, wherein the heat dissipation recesses extend in a thickness direction of the shell body without penetrating the shell body.

The at least one face of the shell body facing and/or facing away from the accommodating cavity is provided with the heat dissipation recesses, so that the face is provided with a non-penetrating "skylight" structure. In this way, the thickness of the shell body can be reduced at positions where the heat dissipation recesses are provided, so as to shorten the conduction path of heat in the accommodating cavity to ensure a short heat diffusion path, which achieves effective and rapid heat dissipation and is conducive to prolonging the service life of the battery.

In addition, the at least one face of the shell body is provided with the heat dissipation recesses, so that on the premise of achieving effective heat dissipation, there is no need to introduce an additional structure, which is not only conducive to reducing the weight of the battery cell, but also does not affect the group margin of an electrode assembly in a covert form, thereby ensuring the stable performance of the battery cell.

The battery cell disclosed in the embodiments of the present application may be used in, but is not limited to, a power consuming device, such as a vehicle, a ship, or an aircraft. A power supply system of the power consuming device may be composed of the battery cell, the battery and the like disclosed in the present application, which is conducive to accelerating dissipation of internal heat, thereby improving the performance stability and service life of the battery.

The embodiments of the present application provide a power consuming device using a battery as a power source. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric car toy, an electric ship toy, and an electric airplane toy. The spacecraft may include an airplane, a rocket, a space shuttle, a spaceship, etc.

In the following embodiments, for ease of illustration, an example in which a power consuming device according to an embodiment of the present application is a vehicle 10000 is taken for description.

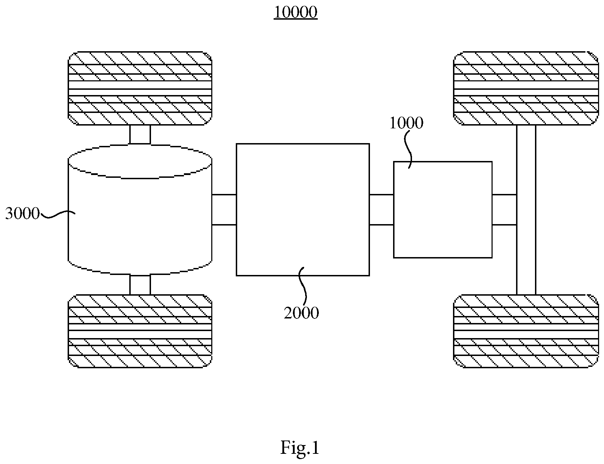

Referring to FIG. 1, FIG. 1 is a schematic diagram of a structure of a vehicle 10000 according to some embodiments of the present application. The vehicle 10000 may be a fuel vehicle, a gas vehicle, or a new energy vehicle. The new energy vehicle may be a battery electric vehicle, a hybrid electric vehicle, or an extended-range vehicle, etc. A battery 1000 is provided inside the vehicle 10000, and the battery 1000 may be provided at a bottom, a head or a tail of the vehicle 10000. The battery 1000 may be configured to supply power to the vehicle 10000. For example, the battery 1000 may be used as a power source for operating the vehicle 10000. The vehicle 10000 may further include a controller 2000 and a motor 3000. The controller 2000 is configured to control the battery 1000 to supply power to the motor 3000, and for example, is configured to meet working power requirements during starting, navigation and traveling of the vehicle 10000.

In some embodiments of the present application, the battery 1000 may not only serve as a power source for operating the vehicle 10000, but also serve as a power source for driving the vehicle 10000, thus replacing or partially replacing fuel or natural gas to provide driving power for the vehicle 10000.

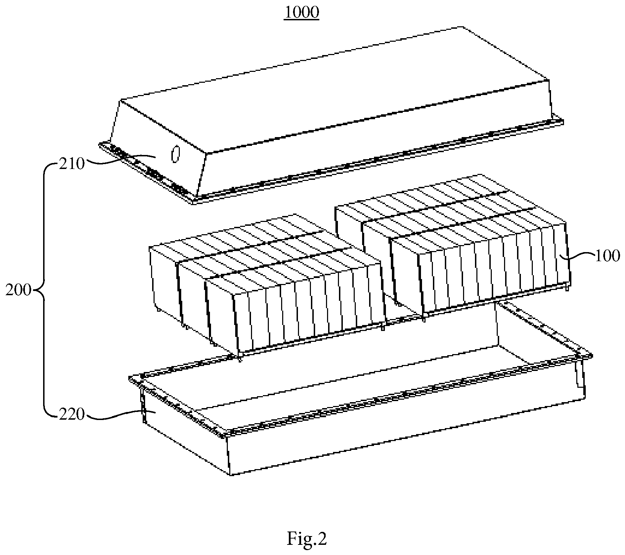

Referring to FIG. 2, FIG. 2 is an exploded view of a battery 1000 according to some embodiments of the present application. The battery 1000 includes a case 200 and a battery cell 100. The battery cell 100 is accommodated in the case 200. The case 200 is configured to provide an accommodating space for the battery cell 100, and the case 200 may be of various structures. In some embodiments, the case 200 may include a first portion 210 and a second portion 220. The first portion 210 and the second portion 220 are fitted to each other in a covering manner, and the first portion 210 and the second portion 220 jointly define the accommodating space for accommodating the battery cell 100. The second portion 220 may be of a hollow structure with one end open, the first portion 210 may be of a platelike structure, and the first portion 210 covers an open side of the second portion 220 such that the first portion 210 and the second portion 220 jointly define the accommodating space; and the first portion 210 and the second portion 220 may also each be of a hollow structure with one side open, and the open side of the first portion 210 covers the open side of the second portion 220. Of course, the case 200 formed by the first portion 210 and the second portion 220 may be in various shapes, such as a cylinder and a cuboid.

In the battery 1000, a plurality of battery cells 100 may be provided. The plurality of battery cells 100 may be in series connection, in parallel connection, or in parallel-series connection. The parallel-series connection means that some of the plurality of battery cells 100 are connected in series and some are connected in parallel. The plurality of battery cells 100 may be directly connected together in series, or in parallel, or in series-parallel, and then a whole composed of the plurality of battery cells 100 is accommodated in the case 200. Of course, the battery 1000 may also be in such a form that multiple battery cells 100 are firstly connected in series or in parallel or in series-parallel to form a module of battery 1000, and then multiple battery modules are connected in series or in parallel or in series-parallel to form a whole and are accommodated in the case 200. The battery 1000 may further include other structures. For example, the battery 1000 may further include a busbar component configured to achieve electrical connections between the multiple battery cells 100.

Each battery cell 100 may be a secondary battery or a primary battery; or may be a lithium-sulfur battery, a sodium-ion battery, or a magnesium-ion battery, but is not limited thereto. The battery cell 100 may be in the shape of a cylinder, a flat body, a cuboid, or the like.

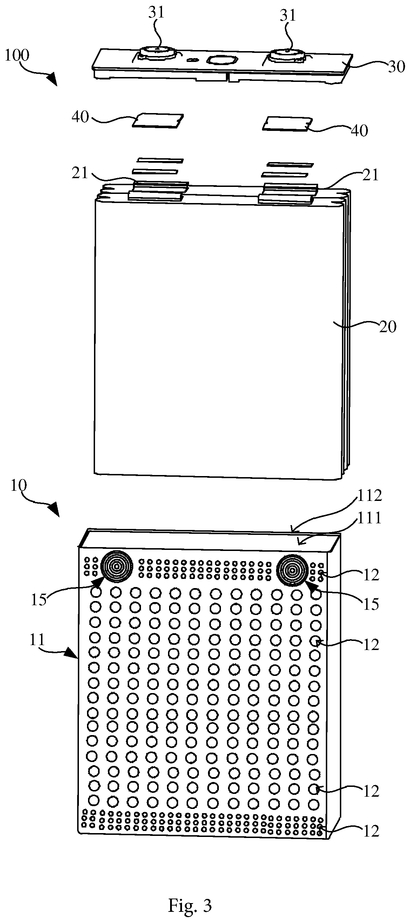

Referring to FIG. 3, FIG. 3 is a schematic exploded view of a structure of a battery cell 100 according to some embodiments of the present application. The battery cell 100 refers to the smallest unit of the battery 1000. As shown in FIG. 3, the battery cell 100 includes an end cap 30, a shell body 11, an electrode assembly 20, and other functional components.

The end cap 30 refers to a component that covers an opening 112 of the shell body 11 to isolate an internal environment of the battery cell 100 from an external environment. Without limitation, the end cap 30 may be shaped to adapt to the shape of the shell body 11 so as to match the shell body 11. The end cap 30 may be made of a material (for example, an aluminum alloy) with a certain hardness and strength. In this way, the end cap 30 is less prone to deformation when subjected to compression and collision, so that the battery cell 100 may have a higher structural strength and the safety performance can also be improved. Functional components, such as electrode terminals, may be provided on the end cap 30. The electrode terminals may be used for electrical connection to the electrode assembly 20 for outputting or inputting electric energy of the battery cell 100. In some embodiments, the end cap 30 may also be provided with a pressure relief mechanism for releasing the internal pressure when the internal pressure or temperature of the battery cell 100 reaches a threshold. The end cap 30 may also be made of various materials, such as copper, iron, aluminum, stainless steel, an aluminum alloy, plastic, etc., which will not be specially limited in the embodiments of the present application. In some embodiments, an insulating member may also be provided on an inner side of the end cap 30, and the insulating member may be used to isolate electrically connected components in the shell body 11 from the end cap 30 to reduce the risk of short circuit. Illustratively, the insulating member may be made of plastic, rubber, etc.

The shell body 11 is an assembly that is configured to fit with the end cap 30 so as to create the internal environment of the battery cell 100, wherein the created internal environment may be used for accommodating the electrode assembly 20, an electrolyte, and other components. The shell body 11 and the end cap 30 may be separate components, the shell body 11 may be provided with an opening 112, and the end cap 30 covers the opening 112 at the opening 112 to form the internal environment of the battery cell 100. Without limitation, the end cap 30 and the shell body 11 may also be integrated with each other. Specifically, the end cap 30 and the shell body 11 may form a common connection face before other components are inserted into the shell body. When the interior of the shell body 11 needs to be packaged, the end cap 30 then covers the shell body 11. The shell body 11 may have various shapes and various sizes, for example, in the shape of a cuboid, a cylinder, a hexagonal prism, etc. Specifically, the shape of the shell body 11 may be determined depending on the specific shape and size of the electrode assembly 20. The shell body 11 may be made of various materials, such as copper, iron, aluminum, stainless steel, an aluminum alloy, plastic, etc., which is not particularly limited in the embodiments of the present application.

The electrode assembly 20 is a component where an electrochemical reaction occurs in the battery cell 100. The shell body 11 may include one or more electrode assemblies 20 therein. The electrode assembly 20 is mainly formed by winding or stacking a positive electrode plate and a negative electrode plate, and a separator is generally arranged between the positive electrode plate and the negative electrode plate. The portions of the positive electrode plate and the negative electrode plate that have an active material constitute a main body portion of the electrode assembly 20, and the portions of the positive electrode plate and the negative electrode plate that have no active material each constitute a tab 21. A positive electrode tab and a negative electrode tab may be located at one end of the main body portion together or respectively located at two ends of the main body portion. During the charging and discharging of the battery 1000, a positive electrode active material and a negative electrode active material react with an electrolyte, and the tabs 21 are connected to the electrode terminals to form a current loop.

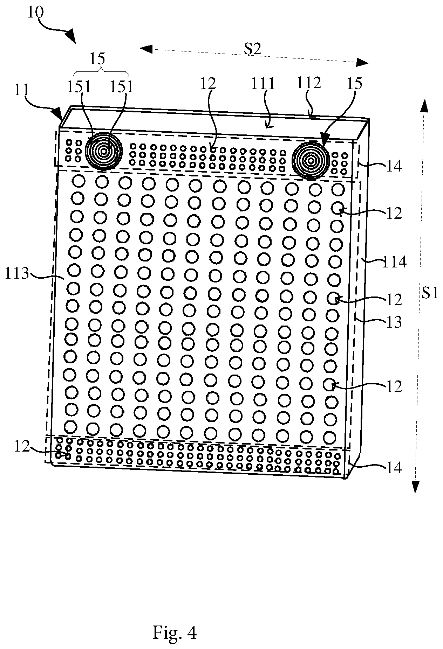

According to some embodiments of the present application, referring to FIG. 4, the present application provides a battery shell 10. The battery shell 10 includes: a shell body 11 and heat dissipation recesses 12. The shell body 11 is internally provided with an accommodating cavity 111. The heat dissipation recesses 12 are provided in at least one face of the shell body 11 facing and/or facing away from the accommodating cavity 111. The heat dissipation recesses 12 extend in a thickness direction of the shell body 11 without penetrating the shell body 11.

The heat dissipation recess 12 refers to a recessed structure provided in one face of the shell body 11, such as a hole-shaped or slot-shaped structure. Providing the heat dissipation recesses 12 in the shell body 11 can reduce the thickness of the shell body 11 at the positions where the heat dissipation recesses 12 are located, so as to shorten the heat path. The heat dissipation recesses 12 may be designed in various shapes, such as a circle, an ellipse, a triangle, a quadrangle, and a pentagon. Of course, the heat dissipation recess may also be designed in an irregular shape.

The heat dissipation recesses 12 may be provided in an inner surface of the shell body 11 (i.e., a face facing the accommodating cavity 111) or in an outer surface of the shell body 11 (i.e., a face facing away from the accommodating cavity 111). Providing the heat dissipation recesses 12 in the outer surface of the shell body 11 can not only improve the heat dissipation efficiency, but also prevent problems such as indentations formed in a surface of the electrode assembly 20 caused by uneven force on a large face when the electrode assembly 20 expands.

The heat dissipation recesses 12 extend in the thickness direction of the shell body 11 without penetrating the shell body 11, that is, the heat dissipation recesses 12 are non-penetrating in the shell body 11. For example, when the heat dissipation recesses 12 are arranged in the outer surface of the shell body 11, one ends of the heat dissipation recesses 12 are not in communication with the accommodating cavity 111; and when the heat dissipation recesses 12 are arranged in the inner surface of the shell body 11, one ends of the heat dissipation recesses 12 are not in communication with the outside.

The shell body 11 may also be designed in various shapes. For example, the shell body 11 may be designed in a shape such as a cylinder, a flat body, or a cuboid. When the shell body 11 is designed in the shape of a cylinder, the outer surface of the shell body 11 and the inner surface of the shell body 11 are each composed of two faces, one of which is a circular bottom surface, and the other is an arc-shaped side surface. When the shell body 11 is designed in the shape of a polygonal column structure, the outer surface or the inner surface of the shell body 11 is composed of multiple faces. In this case, the heat dissipation recesses 12 may be provided in one of the faces or in all the faces, etc.

In some embodiments, the shell body 11 may be designed as an openable closed structure, that is, there is no opening 112 in the accommodating cavity 111. In this case, during assembly of the battery cell 100, the end cap 30 and other structures may not be provided. Of course, the shell body 11 may also be designed as an open structure, that is, the accommodating cavity 111 is provided with an opening 112, and the end cap 30 covers the opening 112.

The at least one face of the shell body 11 facing and/or facing away from the accommodating cavity 111 is provided with the heat dissipation recesses 12, so that the face is provided with a non-penetrating "skylight" structure. In this way, the conduction path of heat in the accommodating cavity 111 can be shortened to ensure a short heat diffusion path, which achieves effective and rapid heat dissipation and is conducive to prolonging the service life of the battery 1000. In addition, on the premise of achieving effective heat dissipation, there is no need to introduce an additional structure, which is not only conducive to reducing the weight of the battery cell 100, but also does not affect the group margin of an electrode assembly 20 in a covert form, thereby ensuring the stable performance of the battery cell 100.

According to some embodiments of the present application, referring to FIG. 4, in at least one face of the shell body 11, a plurality of heat dissipation recesses 12 are provided, and all the heat dissipation recesses 12 are arranged at intervals.

The "face" in the at least one face of the shell body 11 may be one face of the inner surface of the shell body 11, or may be one face of the outer surface of the shell body 11. For ease of understanding, taking a prismatic battery cell 100 as an example, at least one face of the shell body 11 may be at least one of five faces of the outer surface (including a bottom surface), or at least one of five faces of the inner surface.

The heat dissipation recesses 12 may be designed to be arranged at intervals in the shell body 11 in various manners. For example, a plurality of heat dissipation recesses 12 are arranged at intervals in a matrix, or a plurality of heat dissipation recesses 12 are arranged in a multi-layer circular ring structure, etc.

The plurality of heat dissipation recesses 12 are arranged at intervals in the at least one face of the shell body 11, so that the face is of a honeycomb structure, thereby further improving heat dissipation efficiency to improve the service life and performance of the battery cell 100.

According to some embodiments of the present application, referring to FIG. 4, an end of the shell body 11 in a first direction S1 is provided with an opening 112 in communication with the accommodating cavity 111. Any face of the shell body 11 around a circumference of the opening 112 is provided with a first region 13 and second regions 14 respectively located on two sides of the first region 13 in the first direction S1. A plurality of heat dissipation recesses 12 are arranged at intervals in each of the first region 13 and the two second regions 14.

Any face of the shell body 11 around the circumference of the opening 112 may be understood as a circumferential side face of the shell body 11, i.e., a face of the shell body 11 other than the face facing away from the opening 112. There may be one face of the shell body 11 around the circumference of the opening 112, such as an arc-shaped curved face, or there may be multiple faces, for example, in the prismatic battery cell 100, there are four faces of the shell body 11 around the circumference of the opening 112.

The two second regions 14 are respectively located on opposite sides of the first region 13 in the first direction S 1, that is, one of the two second regions 14 is arranged closer to the opening 112, and the other is closer to a bottom of the shell body 11. The first region 13 is closer to the middle of the shell body 11.

A boundary between the first region 13 and the second region 14 may depend on the structure of the actual battery cell 100. For example, the second region 14 may be defined as a projection region of a gap between the end cap 30 and the electrode assembly 20 on the shell body 11. In addition, the first region 13 may have a certain distance from the second region 14, and of course, the first region 13 and the second region 14 may also be arranged closely together.

The shell body 11 is divided in regions in the first direction S 1. In this way, the heat dissipation recesses 12 are configured such that the distribution density, shapes and sizes of the heat dissipation recesses 12 can be well adjusted according to the current distribution and heat distribution, so as to achieve more reasonable heat distribution on the shell body 11.

According to some embodiments of the present application, referring to FIG. 4, a distribution density of the heat dissipation recesses 12 in each second region 14 is greater than that of the heat dissipation recesses 12 in the first region 13.

The distribution density of the heat dissipation recesses 12 refers to the number of heat dissipation recesses 12 distributed per unit area, which is related to the sizes of the heat dissipation recesses 12 and the distance between the two adjacent heat dissipation recesses 12. For example, taking circular heat dissipation recesses 12 as an example, in the second region 14, the diameter of the heat dissipation recesses 12 is denoted as A1, and the distance between centers of the two adjacent heat dissipation recesses 12 is denoted as A2. In this case, the distribution density in the second region 14 should be: S1 = π * (A1/2)²/(A2)². In the first region 13, the diameter of the heat dissipation recesses 12 is denoted as A3, and the distance between centers of the two adjacent heat dissipation recesses 12 is denoted as A4. In this case, the distribution density in the first region 13 should be: S2 = π * (A3/2)²/(A4)². The diameter of the heat dissipation recess 12 in the first region 13 may be greater than that of each of the heat dissipation recess 12 in the second region 14.

Since the top of the shell body 11 is opposite to the tab 21, and the tab 21 serves as the region for welding contact and current convergence to result in a relatively large amount of generated heat, the heat generated at the top of the shell body 11 will be greater. In addition, in the region of the shell body 11 close to the bottom, lithium precipitation often occurs due to the existence of an edge effect. To this end, the distribution density of the heat dissipation recesses 12 in the two second regions 14 are increased, which is conducive to accelerating the heat dissipation from the top and the bottom of the shell body 11.

The distribution density of the heat dissipation recesses 12 in the second region 14 is greater than that of the heat dissipation recesses 12 in the first region 13, so as to achieve better heat dissipation effect of the shell body 11 close to the top and the bottom to ensure more uniform heat dissipation distribution for the battery shell 10.

According to some embodiments of the present application, referring to FIG. 4, at least one heat-conducting structure 15 is provided in the second region 14 close to the opening 112 on at least one face of the shell body 11 which is arranged around the circumference of the opening 112 and parallel to a second direction S2, and the heat-conducting structure 15 is located at a position corresponding to a tab 21 of an electrode assembly 20. The second direction S2 is a length direction of the opening 112 and intersects the first direction S 1.

The heat-conducting structure 15 refers to a structure that can effectively dissipate the heat from the position where the tab 21 is located. For example, the heat-conducting structure 15 may be of a slot-shaped or hole-shaped structure, or may be a refrigeration structure, such as a semiconductor refrigeration sheet.

The second direction S2 refers to the length direction of the opening 112, and of course, may also be understood as a length direction of the end cap 30. The face of the shell body 11 parallel to the second direction S2 is a face parallel to the length of the end cap 30. Taking the prismatic battery cell 100 as an example, the face of the shell body 11 parallel to the second direction S2 is a large face of the battery shell 10, etc. Specifically, in some embodiments, the first direction S1 and the second direction S2 are perpendicular to each other.

The heat-conducting structure 15 is arranged at the position corresponding to the tab 21, so that the heat dissipation efficiency at this position is improved, so as to ensure more uniform heat dissipation from the battery cell 100.

According to some embodiments of the present application, referring to FIG. 4, the heat-conducting structure 15 includes at least two heat-conducting annular slots 151. All the heat-conducting annular slots 151 are sequentially arranged one inside another at intervals in a sleeving manner in a radial direction of the heat-conducting structure 15.

Being sequentially arranged one inside another at intervals in a sleeving manner in a radial direction of the heat-conducting structure 15 should be understood as follows: the heat-conducting structure 15 includes at least two heat-conducting annular slots 151, and the heat-conducting annular slots 151 are arranged one inside another in a sleeving manner. For ease of understanding, taking three heat-conducting annular slots 151 as an example, one heat-conducting annular slot 151 is sleeved outside another heat-conducting annular slot 151, and the last heat-conducting annular slot 151 is sleeved outside the two heat-conducting annular slots 151.

The shape of the heat-conducting annular slot 151 may be designed as a circular ring, or may be designed as a deformable multi-ring structure.

The heat-conducting structure 15 is designed as a multi-ring structure, which accelerates the dissipation of heat generated at the tab 21 to alleviate the problem of great temperature rise due to heat generation at the tab 21.

According to some embodiments of the present application, referring to FIG. 4, depths of the heat-conducting annular slots 151 gradually decrease outward in the radial direction of the heat-conducting structure 15.

Being outward in the radial direction of the heat-conducting structure 15 should be understood as follows: the heat-conducting structure 15 is a multi-ring structure, and the direction from the innermost heat-conducting annular slot 151 to the outermost heat-conducting annular slot 151 is the outwardly radial direction of the heat-conducting structure 15. The depths of the heat-conducting annular slots 151 gradually decreasing outward in the radial direction of the heat-conducting structure 15 means that depth values thereof are gradually reduced from the innermost heat-conducting annular slot 151 to the outermost heat-conducting annular slot 151.

The depths of the heat-conducting annular slots 151 gradually decrease from the inner circle to the outer circle, so that the heat-conducting structure 15 can adapt to the regions with different amounts of generated heat to achieve more uniform heat dissipation.

According to some embodiments of the present application, referring to FIG. 4, two heat-conducting structures 15 are provided. The two heat-conducting structures 15 are arranged at positions corresponding to two tabs 21 on the electrode assembly 20 on a one-to-one basis.

The two heat-conducting structures 15 being arranged at positions corresponding to the two tabs 21 on a one-to-one basis means that each heat-conducting structure 15 directly and effectively dissipates heat generated at the corresponding tab 21, that is, one of the heat-conducting structures 15 corresponds to the positive electrode tab; and the other heat-conducting structure 15 corresponds to the negative electrode tab. Specifically, in some embodiments, the positions of the heat-conducting structures 15 may be projection regions of the tabs 21 on the shell body 11.

The heat-conducting structures 15 are arranged corresponding to the tabs 21 on a one-to-one basis, so that the heat generated at the two tabs 21 can be effectively dissipated, thereby improving the heat dissipation efficiency of the battery cell 100.

According to some embodiments of the present application, referring to FIG. 4, the faces of the shell body 11 around the circumference of the opening 112 include two first side faces 113 parallel to the second direction S2 and two second side faces 114 connected to the two first side faces 113. The heat dissipation recesses 12 are arranged at intervals in each of the two first side faces 113 and the two second side faces 114.

The first side faces 113 and the second side faces 114 may be flat faces or curved faces. When the first side faces 113 and the second side faces 114 are flat faces, the shell body 11 is of a quadrangular structure. Specifically, in some embodiments, the shell body 11 is of a square structure.

The connection between the first side faces 113 and the second side faces 114 may be achieved in such a manner of, but is not limited to, welding, bonding, and integral molding. The integral molding is die-casting, casting, stamping, or the like.

The heat dissipation recesses 12 are respectively distributed in three regions in the first side faces 113 and the second side faces 114. For example, the first side faces 113 and the second side faces 114 each include a first region 13 and two second regions 14 in the first direction S 1. A plurality of heat dissipation recesses 12 are arranged at intervals in each of the first region 13 and the two second regions 14.

The faces of the shell body 11 around the periphery of the opening 112 is designed to include the two first side faces 113 and the two second side faces 114, and the plurality of heat dissipation recesses 12 are arranged in each of the first side faces 113 and the second side faces 114, so as to achieve more uniform and effective circumferential heat dissipation from the shell body 11.

According to some embodiments of the present application, referring to FIG. 4, each of the heat dissipation recesses 12 in the first region 13 of the first side face 113 has a depth which is 0.06-0.4 of the thickness of the shell body 11 at the first side face 113.

The ratio of the depth of the heat dissipation recess 12 in the first region 13 to the thickness of the shell body 11 at the first side face 113 may be, but is not limited to, 0.06, 0.1, 0.14, 0.18, 0.22, 0.26, 0.30, 0.4, etc.

The depths of the heat dissipation recesses 12 in the first region 13 of the first side face 113 are reasonably controlled, so that on the promise of ensuring effective heat dissipation, the structural strength of the first side face 113 is also ensured, so as to prevent deformation of the entire structure due to the expansion of the electrode assembly 20.

According to some embodiments of the present application, referring to FIG. 4, each of the heat dissipation recesses 12 in the second region 14 of the first side face 113 has a depth which is 0.06-0.3 of the thickness of the shell body 11 at the first side face 113.

The ratio of the depth of the heat dissipation recess 12 in the second region 14 to the thickness of the shell body 11 at the first side face 113 may be, but is not limited to, 0.06, 0.1, 0.14, 0.18, 0.22, 0.26, 0.30, etc. In contrast, an upper limit value of the depth of the heat dissipation recess 12 in the first region 13 may be designed to be greater.

The depths of the heat dissipation recesses 12 in the second region 14 of the first side face 113 are reasonably controlled, so that on the promise of ensuring effective heat dissipation, the structural strength of the first side face 113 is also ensured, so as to prevent deformation of the entire structure due to the expansion of the electrode assembly 20.

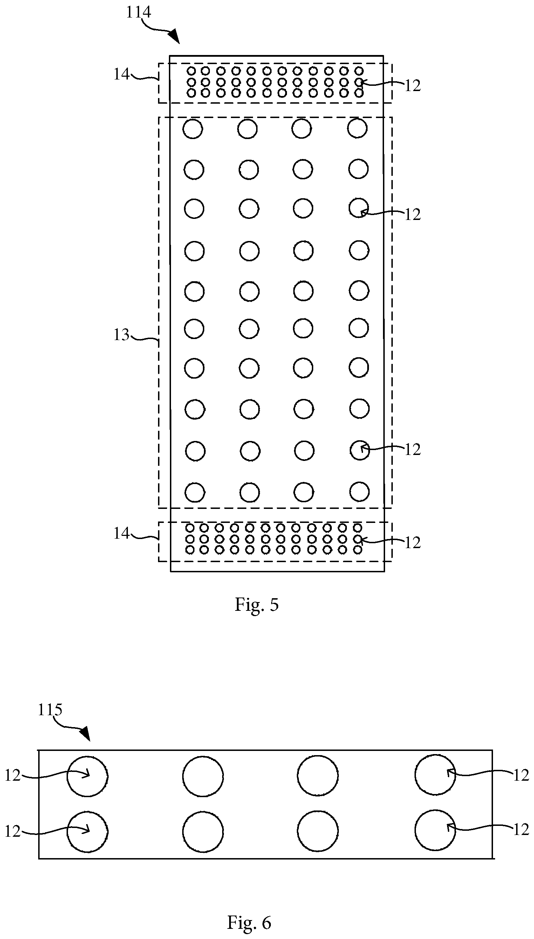

According to some embodiments of the present application, referring to FIG. 5, each of the heat dissipation recesses 12 in the first region 13 of the second side face 114 has a depth which is 0.1-0.4 of the thickness of the shell body 11 at the second side face 114.

The ratio of the depth of each of the heat dissipation recess 12 in the first region 13 to the thickness of the shell body 11 at the second side face 114 may be, but is not limited to, 0.1, 0.14, 0.18, 0.22, 0.26, 0.30, 0.34, 0.38, 0.40, etc.

The depths of the heat dissipation recesses 12 in the first region 13 of the second side face 114 are reasonably controlled, so that on the promise of ensuring effective heat dissipation, the structural strength of the second side face 114 is also ensured, so as to prevent deformation of the entire structure due to the expansion of the electrode assembly 20.

According to some embodiments of the present application, referring to FIG. 5, each of the heat dissipation recesses 12 in the second region 14 of the second side face 114 has a depth which is 0.05-0.55 of the thickness of the shell body 11 at the second side face 114.

The ratio of the depth of the heat dissipation recesses 12 in the second region 14 to the thickness of the shell body 11 at the second side face 114 may be, but is not limited to, 0.05, 0.1, 0.14, 0.18, 0.22, 0.26, 0.30, 0.34, 0.38, 0.40, 0.45, 0.50, 0.55, etc.

The depths of the heat dissipation recesses 12 in the second region 14 of the second side face 114 are reasonably controlled, so that on the promise of ensuring effective heat dissipation, the structural strength of the second side face 114 is also ensured, so as to prevent deformation of the entire structure due to the expansion of the electrode assembly 20.

According to some embodiments of the present application, referring to FIG. 6, the faces of the shell body 11 facing away from the opening 112 include a bottom face 115. A plurality of heat dissipation recesses 12 are arranged at intervals in the bottom face 115.

The heat dissipation recesses 12 may be designed to be arranged at intervals in the bottom face 115 in various manners. For example, a plurality of heat dissipation recesses 12 are arranged at intervals in a matrix, or a plurality of heat dissipation recesses 12 are arranged in a multi-layer circular ring structure, etc.

Since the bottom face 115 is usually subjected to thermal radiation, providing the heat dissipation recesses 12 in the bottom face 115 is conducive to accelerating heat exchange between a fluid and a cell.

According to some embodiments of the present application, referring to FIG. 6, each of the heat dissipation recesses 12 in the bottom face 115 has a depth which is 0.1-0.5 of the thickness of the shell body 11 at the bottom face 115.

The shell body 11 at the bottom face 115 is generally thick, so that the depths of the heat dissipation recesses 12 are controlled to be 0.1-0.5 of the thickness of the shell body 11 at the bottom face 115. The ratio of the depth of the heat dissipation recess 12 in the bottom face 115 to the thickness of the shell body 11 at the bottom face 115 may be, but is not limited to, 0.1, 0.14, 0.18, 0.22, 0.26, 0.30, 0.34, 0.38, 0.40, 0.45, 0.50, etc.

The depths of the heat dissipation recesses 12 in the bottom face 115 are reasonably controlled, so that on the promise of ensuring effective heat dissipation, the structural strength of the bottom face 115 is also ensured, so as to prevent deformation of the entire structure due to the expansion of the electrode assembly 20.

According to some embodiments of the present application, all the heat dissipation recesses 12 are provided in an outer surface of the shell body 11 facing away from the accommodating cavity 111.

All the heat dissipation recesses 12 are located in the outer surface of the shell body 11, which can improve the appearance effect of the battery cell 100, and also avoid affecting the internal structure of the battery cell 100.

The heat dissipation recesses 12 are arranged in the outer surface of the shell body 11, which can not only improve the heat dissipation efficiency, but also prevent problems such as indentations formed in a surface of the electrode assembly 20 caused by uneven force on a large face when the electrode assembly 20 expands.

According to some embodiments of the present application, referring to FIG. 3, the present application provides a battery cell 100, including: an electrode assembly 20, and a battery shell 10 in any one of the solutions described above. The electrode assembly 20 is accommodated in the accommodating cavity 111.

The battery cell 100 further includes an end cap 30. The end cap 30 covers the opening 112 of the shell body 11 to provide a closed environment for the electrode assembly 20. The end cap 30 is provided with a post terminal 31, and the post terminal 31 is electrically connected to the tab 21 on the electrode assembly 20.

In the battery cell 100 described above using the above battery shell 10, the thickness of the shell body 11 is reduced at positions where the heat dissipation recesses 12 are provided, so as to shorten the conduction path of heat in the accommodating cavity 111 to ensure a short heat diffusion path, which achieves effective and rapid heat dissipation and is conducive to prolonging the service life of the battery 1000.

According to some embodiments of the present application, the present application provides a battery 1000. The battery 1000 includes a battery cell 100 described above.

According to some embodiments of the present application, the present application provides a power consuming device. The power consuming device includes a battery 1000 described above. The battery 1000 is configured to supply electric energy.

The power consuming device may be any one of the foregoing apparatuses or systems using the battery 1000.

According to some embodiments of the present application, referring to FIGS. 3 to 6, the present application provides a battery 1000. The battery 1000 is composed of a shell body 11, an end cap 30, and an electrode assembly 20. The shell body 11 is provided with non-penetrating honeycomb-shaped heat dissipation recesses 12 in first side faces 113, second side faces 114 and a bottom face 115. The distribution density of the heat dissipation recesses 12 is larger in the second region 14 (at two ends) of the first side face 113. The diameter is A1, the distance between centers of the two adjacent circles is A2, and then the distribution density is S1 = π * (A1/2)²/A2². The multi-ring heat-conducting structure 15 is used at the tab 21 to alleviate the problem of great temperature rise due to heat generation at the tab 21, and the depths sequentially decrease from the inner circle to the outer circle. Each of the heat dissipation recesses 12 has a depth which is 0.06-0.3 of the thickness of the shell body 11 at the first side face 113. The distribution density of the heat dissipation recesses 12 is smaller in the first region 13 (a middle region). The diameter is A3, the distance between centers of the two adjacent circles is A4, and then the distribution density is S2 = π * (A3/2)²/A4². Each of the heat dissipation recesses 12 has a depth which is 0.06-0.4 of the thickness of the shell body 11 at the first side face 113.

Each of the heat dissipation recesses 12 in the second region 14 of the second side face 114 has a depth which is 0.05-0.55 of the thickness of the shell body 11 at the second side face 114. Each of the heat dissipation recesses 12 in the first region 13 has a depth which is 0.1-0.4 of the thickness of the shell body 11 at the second side face 114. Each of the heat dissipation recesses 12 in the bottom face 115 has a depth which is 0.1-0.5 of the thickness of the shell body 11 at the second side face 114.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery shell (10), comprising:
a shell body (11) internally provided with an accommodating cavity (111); and
heat dissipation recesses (12) provided in at least one face of the shell body (11) facing and/or facing away from the accommodating cavity (111),
wherein the heat dissipation recesses (12) extend in a thickness direction of the shell body (11) without penetrating the shell body (11), a plurality of heat dissipation recesses (12) are provided in the at least one face of the shell body (11), and all the heat dissipation recesses (12) are arranged at intervals.

2. The battery shell (10) according to claim 1, wherein an end of the shell body (11) in a first direction (S1) is provided with an opening (112) in communication with the accommodating cavity (111), any face of the shell body (11) around a circumference of the opening (112) is provided with a first region (13) and second regions (14) respectively located on two sides of the first region (13) in the first direction (S1), and the plurality of heat dissipation recesses (12) are arranged at intervals in each of the first region (13) and the two second regions (14).

3. The battery shell (10) according to claim 2, wherein a distribution density of the heat dissipation recesses (12) in each of the second regions (14) is greater than that of the heat dissipation recesses (12) in the first region (13).

4. The battery shell (10) according to claim 2, wherein at least one heat-conducting structure (15) is arranged in the second region (14) close to the opening (112) on at least one face of the shell body (11) which is arranged around the circumference of the opening (112) and parallel to a second direction (S2), and the heat-conducting structure (15) is located at a position corresponding to a tab (21) of an electrode assembly (20),
wherein the second direction (S2) is a length direction of the opening (112) and intersects the first direction (S1).

5. The battery shell (10) according to claim 4, wherein the heat-conducting structure (15) comprises at least two heat-conducting annular slots (151), and all the heat-conducting annular slots (151) are sequentially arranged one inside another at intervals in a sleeving manner in a radial direction of the heat-conducting structure (15).

6. The battery shell (10) according to claim 5, wherein depths of the heat-conducting annular slots (151) gradually decrease outward in the radial direction of the heat-conducting structure (15).

7. The battery shell (10) according to claim 4, wherein two heat-conducting structures (15) are provided, and the two heat-conducting structures (15) are arranged at positions corresponding to two tabs (21) on the electrode assembly (20) on a one-to-one basis.

8. The battery shell (10) according to claim 4, wherein the face of the shell body (11) around the circumference of the opening (112) comprises two first side faces (113) parallel to the second direction (S2) and two second side faces (114) connected to the two first side faces (113), and the heat dissipation recesses (12) are arranged at intervals in each of the two first side faces (113) and the two second side faces (114).

9. The battery shell (10) according to claim 8, wherein each of the heat dissipation recesses (12) in the first region (13) of the first side face (113) has a depth which is 0.06-0.4 of the thickness of the shell body (11) at the first side face (113).

10. The battery shell (10) according to claim 8 or 9, wherein each of the heat dissipation recesses (12) in the second region (14) of the first side face (113) has a depth which is 0.06-0.3 of the thickness of the shell body (11) at the first side face (113).

11. The battery shell (10) according to any one of claims 8-10, wherein each of the heat dissipation recesses (12) in the first region (13) of the second side face (114) has a depth which is 0.1-0.4 of the thickness of the shell body (11) at the second side face (114).

12. The battery shell (10) according to any one of claims 8-11, wherein each of the heat dissipation recesses (12) in the second region (14) of the second side face (114) has a depth which is 0.05-0.55 of the thickness of the shell body (11) at the second side face (114).

13. The battery shell (10) according to any one of claims 2-12, wherein the face of the shell body (11) facing away from the opening (112) comprises a bottom face (115), and the plurality of heat dissipation recesses (12) are arranged at intervals in the bottom face (115).

14. The battery shell (10) according to claim 12, wherein each of the heat dissipation recesses (12) in the bottom face (115) has a depth which is 0.1-0.5 of the thickness of the shell body (11) at the bottom face (115).

15. The battery shell (10) according to any one of claims 1-14, wherein all the heat dissipation recesses (12) are arranged in an outer surface of the shell body (11) facing away from the accommodating cavity (111).

16. A battery cell (100), comprising:
a battery shell (10) according to any one of claims 1-15; and
an electrode assembly (20) accommodated in the accommodating cavity (111).

17. A battery, comprising a battery cell (100) according to claim 16.

18. A power consuming device, comprising a battery according to claim 17 configured to supply electric energy.
